# EUROPEAN PATENT APPLICATION

(11) **EP 4 538 867 A1**
(43) Date of publication of application: **16.04.2025**
(21) Application number: 24195802.4
(22) Date of filing: 22.08.2024
(51) Int. Cl.: G06F 8/654, G06F 8/61

(54) **SYSTEM FOR DISTRIBUTING FIRMWARE IMAGES TO SYSTEM ON CHIP NODES IN A HIGH-PERFORMANCE COMPUTING ENVIRONMENT**

(30) Priority: 10.10.2023 US 202363543510 P; 10.01.2024 US 202418409781
(71) Applicant: Samsung Electronics Co., Ltd., Gyeonggi-do, 16677 (KR)
(72) Inventor: MINNICH, Ronald, San Jose, CA, 95134 (US)
(74) Representative: Kuhnen & Wacker Patent- und Rechtsanwaltsbüro PartG mbB

(57) **Abstract**

Provided are systems, methods, and apparatuses for distributing code images via an update controller 705. In one or more examples, the systems, methods, and apparatuses include sending, via a serial interface 720, a hold command to hold a first node 715a in a reset mode, the first node 715a being connected to the update controller 705via the serial interface 720; writing, via the serial interface 720, a code image to a memory of the first node 715a, the memory being connected to the serial interface 720; upon determining the code image is written to the memory, sending, via the serial interface 720, a release command to the first node 715a to release the first node 715a from the reset mode; and removing, via the serial interface 720, the code image from the memory upon detecting the first node 715a is rebooted.

## Description

### TECHNICAL FIELD

The disclosure relates generally to memory systems, and more particularly to system on chip design for high-performance computing.

### BACKGROUND

The present background section is intended to provide context only, and the disclosure of any concept in this section does not constitute an admission that said concept is prior art.

The following relates to high-performance computing (HPC). HPC uses parallel data processing to improve computing performance. HPC involves aggregating computing power to perform complex calculations and simulations, enabling advanced applications to run efficiently, reliably, and quickly. HPC may use groups of servers (e.g., clusters) to process complex calculations at high speeds. Clusters can be made up of hundreds or thousands of compute servers that are connected through a network.

The above information disclosed in this Background section is only for enhancement of understanding of the background of the disclosure and therefore it may contain information that does not constitute prior art.

### SUMMARY

In various embodiments, described herein include systems, methods, and apparatuses for system on chip design for high-performance computing. In some aspects, the techniques described herein relate to a method of distributing code images via an update controller, the method including: sending, via a serial interface, a hold command to hold a first node in a reset mode, the first node being connected to the update controller via the serial interface; writing, via the serial interface, a code image to a memory of the first node, the memory being connected to the serial interface; upon determining the code image is written to the memory, sending, via the serial interface, a release command to the first node to release the first node from the reset mode; and removing, via the serial interface, the code image from the memory of the first node upon detecting the first node is rebooted.

In some aspects, the techniques described herein relate to a method, wherein writing the code image to the memory of the first node is based on a serial interface host of the update controller issuing a write request to a serial interface target of the first node.

In some aspects, the techniques described herein relate to a method, wherein sending the hold command is based on the update controller sending a reboot command to the first node.

In some aspects, the techniques described herein relate to a method, wherein sending the reboot command includes sending the reboot command to a group of nodes that include the first node.

In some aspects, the techniques described herein relate to a method, further including: selecting the group of nodes via a select line of the serial interface; and writing the code image to the group of nodes concurrently via a broadcast mode of the serial interface.

In some aspects, the techniques described herein relate to a method, wherein sending the hold command is based on the update controller detecting that the first node is rebooting.

In some aspects, the techniques described herein relate to a method, wherein the serial interface is a serial peripheral interface or a quad serial peripheral interface.

In some aspects, the techniques described herein relate to a method, wherein the update controller is a baseboard management controller (BMC).

In some aspects, the techniques described herein relate to a method of receiving, at a first node, code images from an update controller, the method including: receiving, via a serial interface, a hold command to hold the first node in a reset mode, the first node being connected to the update controller via the serial interface; receiving, via the serial interface, a code image at a memory of the first node, the memory being connected to the serial interface; receiving, via the serial interface, a release command from the update controller to release the first node from the reset mode; and based on the release command, rebooting the first node and executing the code image.

In some aspects, the techniques described herein relate to a method, wherein the first node receiving the code image at the memory of the first node is based on a serial interface target of the first node receiving a write request from a serial interface host of the update controller.

In some aspects, the techniques described herein relate to a method, wherein executing the code image is based on a mask read-only memory of the first node initiating execution of an executable included in the code image that is stored in the memory.

In some aspects, the techniques described herein relate to a method, determining, after rebooting, that a status of the memory indicates the code image is removed from the memory.

In some aspects, the techniques described herein relate to a method, wherein: receiving the hold command is based on the first node receiving a reboot command from the update controller, and receiving the reboot command is based on the reboot command being received by a group of nodes that include the first node.

In some aspects, the techniques described herein relate to a method, wherein: the group of nodes, including the first node, are selected to receive the code image via a select line of the serial interface, and the code image is received by the first node concurrently with the group of nodes based on a broadcast mode of the serial interface.

In some aspects, the techniques described herein relate to a method, wherein the serial interface is a serial peripheral interface or a quad serial peripheral interface.

In some aspects, the techniques described herein relate to a method, wherein the memory of the first node is an on-chip volatile memory communicatively connected to the serial interface as a writeable target.

In some aspects, the techniques described herein relate to a method, wherein the first node is a first system on chip of a solid-state drive.

In some aspects, the techniques described herein relate to a non-transitory computer-readable medium storing code, the code including instructions executable by a processor of an update controller to: send, via a serial interface, a hold command to hold a first node in a reset mode, the first node being connected to the update controller via the serial interface; write, via the serial interface, a code image to a memory of the first node, the memory being connected to the serial interface; upon determining the code image is written to the memory, send, via the serial interface, a release command to the first node to release the first node from the reset mode; and remove, via the serial interface, the code image from the memory of the first node upon detecting the first node is rebooted.

In some aspects, the techniques described herein relate to a non-transitory computer-readable medium, wherein writing the code image to the memory of the first node is based on a serial interface host of the update controller issuing a write request to a serial interface target of the first node.

In some aspects, the techniques described herein relate to a non-transitory computer-readable medium, wherein sending the hold command is based on the update controller sending a reboot command to the first node.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

Accordingly, particular embodiments of the subject matter described herein can be implemented so as to realize one or more of the following advantages: Optimize application processing efficiency, reduce latency, and minimize security risks. Based on the described techniques, persistent firmware does not remain on an untrusted system. Accordingly, malware is prevented from attacking persistent firmware parts on a given device (e.g., system on chip (SoC)), since there is nothing to attack (e.g., the persistent firmware is removed). In an example system with 32 SoCs, the cost of the system is reduced based on the removal of 32 read-only memories (ROMs) and 32 Silicon Roots of Trust (SRoTs) that would otherwise be associated with each SoC based on conventional approaches. Also, based on the described techniques, code (e.g., a trusted code image) can be updated via the baseboard management controller (BMC) in less time (e.g., 1/1000th of the time) compared to conventional approaches. Also, based on the techniques described herein, security risks are minimized because SoC firmware does not persist. Thus, persistent threats are removed or minimized based on the described techniques. Accordingly, the described techniques provide decreased computational delays, improves efficient use of system resources, and increases system security.

### BRIEF DESCRIPTION OF THE DRAWINGS

The above-mentioned aspects and other aspects of the present techniques will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings wherein.
FIG. 1 illustrates an example system in accordance with one or more implementations as described herein.
FIG. 2 illustrates details of the machine of FIG. 1, according to one or more implementations as described herein.
FIG. 3 illustrates an example system on chip configuration.
FIG. 4 illustrates an example system on chip configuration.
FIG. 5 illustrates an example system in accordance with one or more implementations as described herein.
FIG. 6 illustrates an example system in accordance with one or more implementations as described herein.
FIG. 7 illustrates an example system in accordance with one or more implementations as described herein.
FIG. 8 illustrates an example system in accordance with one or more implementations as described herein.
FIG. 9 illustrates an example system in accordance with one or more implementations as described herein.
FIG. 10 depicts a flow diagram illustrating an example method associated with the disclosed systems, in accordance with example implementations described herein.
FIG. 11 depicts a flow diagram illustrating an example method associated with the disclosed systems, in accordance with example implementations described herein.
FIG. 12 depicts a flow diagram illustrating an example method associated with the disclosed systems, in accordance with example implementations described herein.

While the present techniques are susceptible to various modifications and alternative forms, specific embodiments thereof are shown by way of example in the drawings and will herein be described. The drawings may not be to scale. It should be understood, however, that the drawings and detailed description thereto are not intended to limit the present techniques to the particular form disclosed, but to the contrary, the intention is to cover all modifications, equivalents, and alternatives falling within the scope of the present techniques as defined by the appended claims.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flowchart illustrations. Accordingly, the block diagrams and flowchart illustrations support various combinations of embodiments for performing the specified instructions, operations, or steps.

The following description is presented to enable one of ordinary skill in the art to make and use the subject matter disclosed herein and to incorporate it in the context of particular applications. While the following is directed to specific examples, other and further examples may be devised without departing from the basic scope thereof.

A baseboard management controller (BMC) is a specialized service processor that monitors the physical state of a computer, server, system (e.g., system on chip, multiple systems on chip), and/or other hardware devices (e.g., monitored devices). The BMC may use one or more sensors to monitor the physical state of the monitored device and may communicate monitoring data (e.g., to a system administrator) based on an independent connection. A BMC may be powered even when the host is powered off (e.g., via an independent power line on the host power). In some cases, the BMC may be part of an intelligent platform management interface (e.g., part of the Intelligent Platform Management Interface (IPMI) standard). In some examples, the BMC may be integrated on a motherboard and/or a main circuit board of a device being monitored. The BMC may include a processor or microcontroller that is integrated into a motherboard (e.g., in a server motherboard). The BMC may include an embedded computer system (e.g., an ARM-based system on chip (SoC)) configured to provide out-of-band (OOB) management. Additionally, or alternatively, the BMC may be positioned on a central device and configured to monitor the central device and/or one or more nodes external to the central device. In some cases, the BMC is an SoC BMC configured to monitor one or more SoC nodes.

Of the devices monitored by a BMC, the sensors of the BMC may be configured to measure internal physical variables such as temperature, humidity, power-supply voltage, fan speeds, remote access, communication parameters and/or operating system (OS) functions. If it is determined that any of these variables stray outside specified limits, the BMC may generate and communicate a notification indicating the condition. A BMC may be configured to diagnose remotely, shut down, power-cycle, and/or reboot a monitored device. Thus, the BMC may enable an administrator to manage remotely one or more monitored devices (e.g., simultaneously or concurrently), saving on the overall operating cost of the network and helping to ensure system reliability.

Communication of the BMC may be based on a bus interface. In some examples, the BMC may communicate via a serial peripheral interface (SPI) and/or a quad serial peripheral interface (QSPI). QSPI is a serial communication interface that allows communication between a host and an external Quad-SPI memory. A QSPI host includes software, firmware, and/or hardware that is configured to issue QSPI read and write requests to a QSPI target. A QSPI target includes software, firmware, and/or hardware that is configured to respond to QSPI read and write requests. QSPI is an enhanced version of SPI (serial peripheral interface). QSPI offers higher speed and additional features than SPI, but QSPI may use more hardware or more complex hardware than SPI. QSPI supports SPI and the dual-SPI communication modes. In quad mode, QSPI may use up to six lines. Quad SPI improves the throughput four times over SPI. QSPI mode reduces the protocol overhead by transferring the opcode using four lanes. QSPI is a full-duplex, synchronous bus that facilitates communication between a control node and one or more subordinate nodes.

A QSPI target may include a data register that allows a QSPI host to communicate data back and forth via the data register. A QSPI host may include a device that controls when to trigger communication and which node or nodes receive a message (e.g., data, code image). A QSPI host controller (e.g., a BMC SoC) may include a full-duplex synchronous serial input/output data connection for communication with one or more nodes (e.g., SoC nodes, SSD nodes, processor nodes, input/output peripheral nodes, analog-to-digital converters (ADCs), etc.). During QSPI communication, data may be simultaneously or concurrently transmitted (data sent serially from a controller to a node) and received (data sent serially from a node to the controller). A serial clock edge synchronizes the shifting and sampling of the data. A QSPI may include one or more clock lines, one or more chip-select lines to select which nodes receive and do not receive a message, one or more data lines for communicating data from controller to node (e.g., from BMC SoC to SoC node), and one or more data lines for communicating data from node to controller (e.g., from SoC node to BMC SoC). In some cases, a QSPI interface includes four data lines.

Based on the techniques and mechanisms described herein, a BMC (e.g., BMC SoC) is configured to control one or more aspects of a given SoC and/or operations of the given SoC. An SoC is configured for subordinate operation or dependent operation (e.g., a given SoC is not configured for standalone operation). The subordinate SoC depends on a BMC (e.g., for firmware, computer code, etc.). The BMC may provide a subordinate SoC with firmware updates. Firmware updates help keep devices (e.g., SoC nodes, SSDs, etc.) up to date. Firmware updates can include bug fixes, new functionality, security updates, program alterations, patches against vulnerabilities, and the like. Firmware updates can include critical firmware updates and/or non-critical firmware updates. In some cases, a BMC may reboot a device (e.g., reset an SoC node, SSD, etc.) and provide a critical firmware update without a delay. Additionally, or alternatively, a BMC may delay rebooting the device when the firmware update is non-critical. For example, the BMC may wait until it detects a device is rebooting and provide the non-critical firmware update based on the device rebooting.

The subordinate SoC is not configured as a QSPI host, but is configured as a QSPI target. Unlike conventional SoCs (e.g., standalone SoCs), the subordinate SoC is configured for high-performance computing. The subordinate SoC, or high-performance computing SoC, depends on a trusted component (e.g., an update controller, the BMC). For subordinate SoCs, SoC code is controlled (e.g., entirely controlled) by the BMC, or the trusted component (e.g., the central trusted component) of a given system. Based on the techniques described herein, the QSPI interface is configured with a broadcast mode that enables communication with up to 64 targets (e.g., 64 daisy chained SoC nodes). For example, the present techniques configure the SPI/QSPIinterface in a manner that provides a broadcast mode for distributing trusted code. Thus, the present techniques enable the BMC to write software code to up to 64 targets (e.g., write firmware to 64 SoC nodes concurrently or simultaneously). In an example system with 64 SoCs, the cost of the system is reduced based on the removal of 64 read-only memories (ROMs) and 64 Silicon Roots of Trust (SRoTs) that would otherwise be associated with each SoC based on conventional approaches. Thus, implementing the described techniques reduce attack points from 130 devices (e.g., the 64 SRoTs, the 64 ROMs, BMC SoC, and BMC QSPI) to just 2 devices (e.g., the BMC SoC and BMC QSPI). Moreover, the BMC does not run or is not permitted to run untrusted code (e.g., based on administrator policy, based on monitoring). For example, the BMC is configured to be accessible only to an administrator and/or is controlled and actively monitored by an administrator, etc.

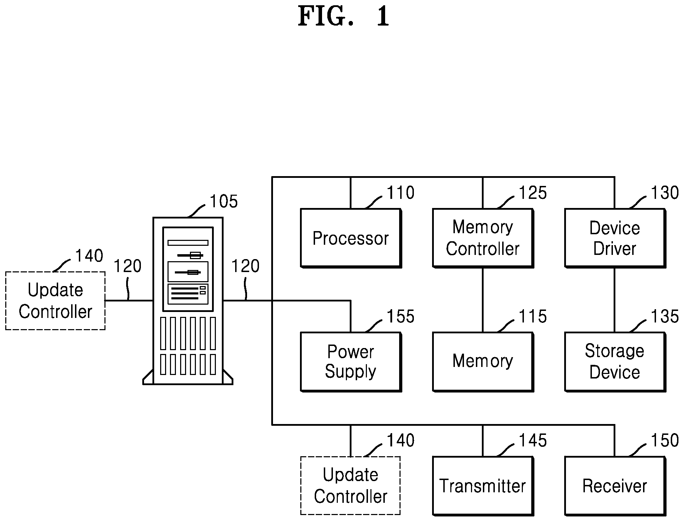

**FIG. 1** illustrates an example system in accordance with one or more implementations as described herein. In FIG. 1, machine 105, which may also be termed a host, a system (e.g., system on chip), or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 135. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115 or storage device 135. When storage device 135 is used to support applications reading or writing data via some sort of file system, storage device 135 may be accessed using device driver 130. While FIG. 1 shows one storage device 135, there may be any number (one or more) of storage devices in machine 105. Storage device 135 may support any desired protocol or protocols, including, for example, the Non-Volatile Memory Express (NVMe) protocol, a Serial Attached Small Computer System Interface (SCSI) (SAS) protocol, or a Serial AT Attachment (SATA) protocol. Storage device 135 may also include any desired interface, including, for example, a Peripheral Component Interconnect Express (PCIe) interface, or a Compute Express Link (CXL) interface. Storage device 135 may also take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid-State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 135 and memory 115.

Machine 105 may also include power supply 155. Power supply 155 may provide power to machine 105 and its components. Power supply 155 may have a maximum amount of power that may be used (before exceeding the specifications of power supply 155): this information may be known to machine 105 and may be used, for example, by update controller 140 in monitoring machine 105. Operating levels of power supply 155 may be adjusted by update controller 140. In some cases, update controller 140 is a BMC (e.g., BMC SoC).

Machine 105 may also include transmitter 145 and receiver 150. Transmitter 145 or receiver 150 may be respectively used to transmit or receive data. In some cases, transmitter 145 and/or receiver 150 may be used to communicate with memory 115 and/or storage device 135.

In one or more examples, machine 105 may be implemented with any type of apparatus. Machine 105 may be configured as (e.g., as a host of) one or more of a server such as a compute server, a storage server, storage node, a network server, a supercomputer, data center system, and/or the like, or any combination thereof. Additionally, or alternatively, machine 105 may be configured as (e.g., as a host of) one or more of a computer such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a graphics processing unit (GPU), a neural processing unit (NPU), a tensor processing unit (TPU), and/or the like, or any combination thereof.

Any communication between devices including machine 105 (e.g., host, computational storage device, and/or any intermediary device) can occur over one or more interfaces (e.g., communication interface 120), which may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interface 120 may include a communication fabric including one or more links, buses, switches, hubs, nodes, routers, translators, repeaters, and/or the like. In some embodiments, the system illustrated herein may include one or more additional apparatus having one or more additional communication interfaces.

Any of the functionality described herein, including any of the host functionality, device functionally, the update controller 140 functionality, and/or the like, may be implemented with hardware, software, firmware, or any combination thereof including, for example, hardware and/or software combinational logic, sequential logic, timers, counters, registers, state machines, volatile memories such as dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), graphics processing units (GPUs), neural processing units (NPUs), tensor processing units (TPUs) and/or the like, executing instructions stored in any type of memory. In some embodiments, one or more components may be implemented as a system-on-chip (SoC).

As shown, the components of machine 105 may include update controller 140 with processor 110, memory 115, power supply 155, etc. As shown, communication interface 120 may include an internal interface of the illustrated components of machine 105. Additionally, or alternatively, communication interface 120 may be an external interface between machine 105 and update controller 140. In one or more examples, communication interface 120 may include a serial peripheral interface (SPI) and/or a quad serial peripheral interface (QSPI).

In some examples, the update controller 140 may include any combination of logic (e.g., logical circuit), hardware (e.g., processing unit, memory, storage), software, firmware, and the like. In some cases, the update controller 140 may perform one or more functions in conjunction with processor 110. In some cases, at least a portion of update controller 140 may be implemented in or by processor 110 and/or memory 115. In some cases, the update controller 140 may perform one or more operations described herein in conjunction with communication interface 120. The update controller 140 may improve application processing efficiency, reduce latency, and minimize security risks of machine 105. Update controller 140 may be configured to remove firmware from an untrusted system (e.g., machine 105). Thus, update controller 140 ensures that firmware does not remain on an untrusted system. Accordingly, update controller 140 prevents malware from attacking persistent firmware parts of a given device (e.g., machine 105), as there is nothing to attack (e.g., the persistent firmware is removed). Update controller 140 may include a baseboard management controller (BMC). In some cases, update controller 140 updates code (e.g., a trusted code image) via a BMC. Based on update controller 140, security risks are minimized because firmware (e.g., SoC firmware) does not persist. As a result, persistent threats are removed or minimized. Accordingly, update controller 140 provides decreased computational delays, improves efficient use of system resources, and increases system security.

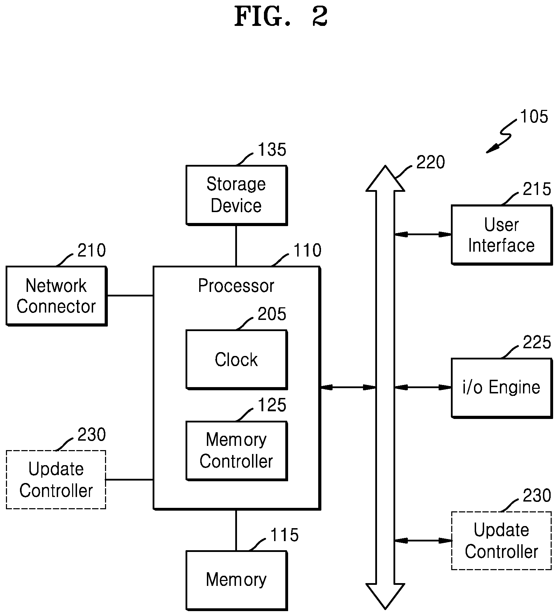

**FIG. 2** illustrates details of machine 105 of FIG. 1, according to examples described herein. In FIG. 2, typically, machine 105 includes a Processor 110, which may include memory controllers 125 and clocks 205, which may be used to coordinate the operations of the components of the machine 105. While FIG. 2 shows a single processor 110, machine 105 may include any number of processors like the processor 110 of FIG. 1. Processor 110 may also be coupled to memories 115, which may include random access memory (RAM), read-only memory (ROM), or other state preserving media, as examples. Processor 110 may also be coupled to storage devices 135, and to network connector 210, which may be, for example, an Ethernet connector or a wireless connector. Processor 110 may also be connected to buses 220, to which may be attached user interfaces 215 and Input/Output (I/O) interface ports that may be managed using I/O engines 225, among other components. As shown, Processor 110 may be coupled to update controller 230, which may be an example of update controller 140 of FIG. 1. Additionally, or alternatively, Processor 110 may be connected to buses 220, to which update controller 230 may be attached. In one or more examples, at least a portion of buses 220 may be an example of communication interface 120. In some cases, buses 220 may include a serial peripheral interface (SPI) and/or a quad serial peripheral interface (QSPI).

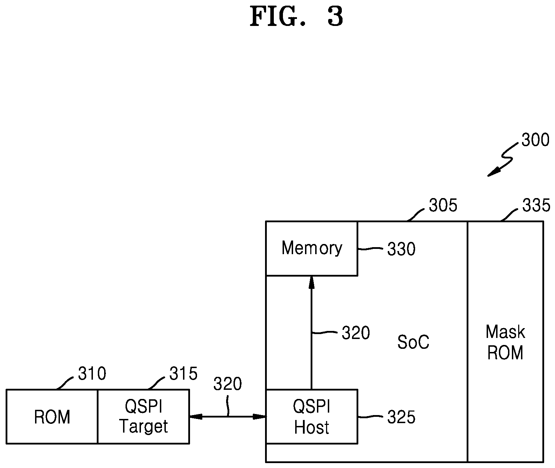

**FIG. 3** illustrates an example SoC configuration 300. In the illustrated example, SoC configuration 300 includes an SoC 305, a read-only memory (ROM) 310, a QSPI target 315, and a communication interface 320 (e.g., SPI communication interface, QSPI communication interface). As shown, SoC 305 includes a QSPI host 325, a memory 330 (e.g., SRAM or other type of memory), a mask ROM 335, and a communication interface 320. As shown, the communication interface 320 enables the QSPI target 315 to communicate with QSPI host 325. As shown, the communication interface 320 enables QSPI host 325 to communicate with memory 330.

In some examples, mask ROM 335 may be configured to copy data to memory 330 via communication interface 320 (e.g., via QSPI). The ROM 310 may be a non-volatile memory that holds power-on software code. Memory 330 may be volatile memory, where data is lost when power is removed. QSPI target 315 includes software and/or hardware (e.g., logical circuitry) configured to handle and/or respond to QSPI read and QSPI write requests (e.g., from QSPI host 325). QSPI host 325 includes software and/or hardware (e.g., logical circuitry) configured to issue QSPI read requests and/or QSPI write requests to QSPI target 315. Mask ROM 335 includes a first program executed by SoC 305 after a power-on/reset. In some cases, mask ROM 335 may include computer code that is "baked in" (e.g., unchangeable).

On reset, mask ROM 335 writes code (e.g., program) to memory 330 from ROM 310 via the communication interface 320 (e.g., via QSPI). SoC 305 then runs the code (e.g., program) in memory 330. For example, on reset, SoC 305 executes start-up code on mask ROM 335 that results in SoC 305 issuing a QSPI read request, via QSPI host 325, for the code on ROM 310. QSPI target 315 receives the QSPI read request, retrieves the requested code from ROM 310, and transmits the requested code to SoC 305 via the communication interface 320. SoC 305 writes the retrieved code to memory 330, then executes the retrieved code written to memory 330.

Based on conventional approaches, an SoC may be configured as an independent system, where each SoC includes one or more kernels. Conventional SoCs are designed as independent, standalone units. For example, an SoC may be designed for a single-SoC system for standalone use. However, some systems use SoCs in subordinate, non-standalone configurations. For example, a supercomputer may include multiple printed circuit boards, where each circuit board includes one or more SoCs. However, using standalone SoCs in such subordinate configurations can lead to increased computational delays, inefficient use of system resources, and decreased system security.

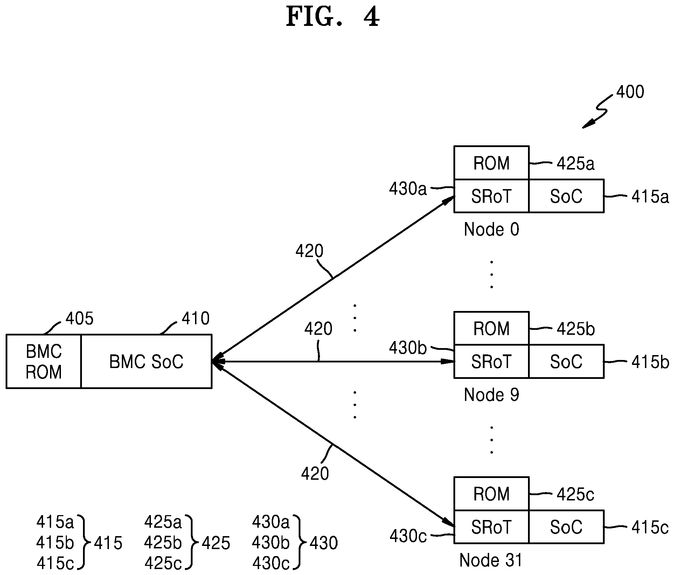

**FIG. 4** illustrates an example SoC configuration 400 (e.g., configuration of a supercomputer system). In the illustrated example, SoC configuration 400 includes a baseboard management controller (BMC) ROM 405, a BMC SoC 410, SoCs 415 (e.g., SoC 415a, SoC 415b, SoC 415c), and a communication interface 420 (e.g., SPI communication interface, QSPI communication interface). As shown, each of the SoCs 415 includes a silicon root of trust (SRoT) (e.g., SRoT 430a, SRoT 430b, SRoT 430c) and a ROM (e.g., ROM 425a, ROM 425b, ROM 425c). Each of SRoTs 430 may be configured as a gatekeeper between the BMC SoC 410 and a given SoC.

Each of SRoTs 430 is placed between the BMC SoC 410 and a ROM of a given SoC (e.g., via a QSPI target of the communication interface 420) to avoid corrupting the ROM (e.g., based on untrusted code, malware, etc.). For example, SRoT(430a) is placed between the BMC SoC 410 and a ROM(425a) of a SoC(415a). In some systems, Each of SRoTs 430 verifies contents of a ROM of a given SoC before the contents are used or executed by a given SoC. Each of SRoTs 430 controls whether the BMC SoC 410 is allowed to update a ROM of a given SoC. Each of SRoTs 430 includes firmware technology that protects system hardware. Each of SRoTs 430 creates a chain of trust that validates that system firmware is legitimate. Thus, Each of SRoTs 430 protects against firmware attacks and can detect malware or compromised firmware.

In the illustrated example, the SoC configuration 400 includes 32 SoCs (e.g., node 0 to node 31). The SoC configuration 400 includes 33 QSPI parts (e.g., 32 SoC 415 and one BMC SoC 410). As shown, the SoC configuration 400 includes 32 SRoTs 430 (e.g., one SRoT for each SoC 415).

Based on conventional approaches, an SoC may be susceptible to running untrusted code, resulting in security risks to a system. In such a system, firmware updates are costly in time and system resources. In order to complete a firmware update, each SoC in the system is updated individually, taking up considerable time and resources, as well as making the system susceptible to malware attacks. Also, because each SRoT has a unique serial number, supply chain management is relatively complex in such systems. The assumption that a conventional SoC is a standalone device (e.g., a standalone device in high-performance computing, in a data center system, in a supercomputer, etc.) leads to unnecessary hardware, complexity, and risk for a given system.

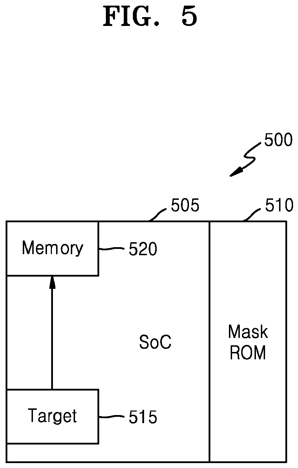

**FIG. 5** illustrates an example system 500 in accordance with one or more implementations as described herein. System 500 shows a schematic of a system on chip configuration (e.g., of a device such as an SSD). As shown, system 500 includes SoC 505. In the illustrated example, SoC 505 is configured to include a mask ROM 510, a target 515 (e.g., QSPI target), and a memory 520 (e.g., SRAM or other type of memory).

In some examples, SoC 505 is configured for data center and/or high-performance environments. The target 515 includes software and/or hardware that responds to read and write requests (e.g., QSPI read requests and QSPI write requests). When a Power-On/Reset occurs, SoC 505 may be held in reset (e.g., in a reset mode) until memory 520 is filled (e.g., until memory 520 receives executable code or a trusted code image). The code image or trusted code image may include a software package (e.g., a software package that includes an executable, a firmware update, an updated version of firmware, etc.).

In some cases, SoC 505 is released from reset based on a communication received from a trusted component (e.g., update controller 140 of FIG. 1, update controller 230 of FIG. 2). For example, SoC 505 may be released from reset based on receiving a communication from a BMC indicating the memory 520 has received a trusted code image. In some cases, SoC 505 monitors memory 520 and releases itself from reset when SoC 505 determines memory 520 has received the executable code (e.g., finished receiving the trusted code image from the trusted component). Mask ROM 510 may include a first program executed by SoC 505 after a Power-On/Reset. Thus, when SoC 505 is released from reset, mask ROM 510 initiates execution of the code in memory 520 via a processor of SoC 505.

In one or more examples, upon reset, QSPI target 515 receives a QSPI write request from a QSPI host of a trusted component (e.g., a BMC SoC). The trusted component then writes the trusted code from a ROM of the trusted component to the memory 520 via target 515 (e.g., based on QSPI communication protocols). SoC 505 then executes the code written to memory 330 (e.g., via one or more processors of SoC 505).

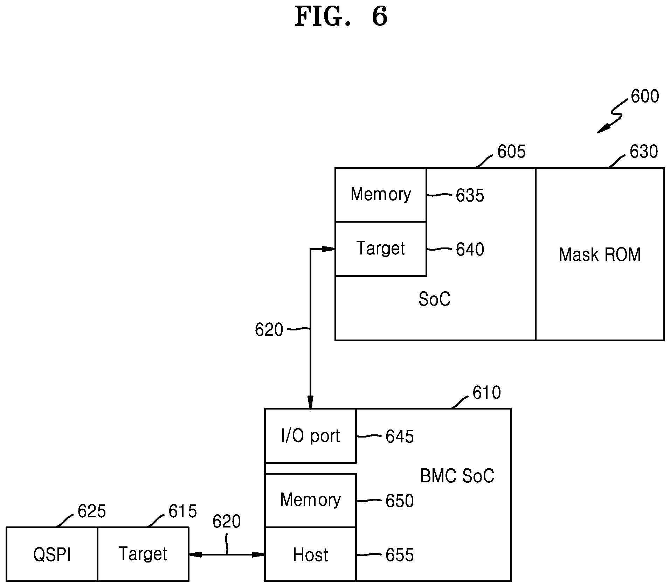

**FIG. 6** illustrates an example system 600 in accordance with one or more implementations as described herein. System 600 shows a schematic of a system on chip configuration. As shown, system 600 includes SoC 605, BMC SoC 610, target 615 (e.g., QSPI target), a communication interface 620 (e.g., SPI communication interface, QSPI communication interface, QSPI bus), and QSPI 625. SoC 605 may be an example of SoC 505 of FIG. 5.

In the illustrated example, SoC 605 includes mask ROM 630, memory 635 (e.g., on-chip memory, on-chip SRAM, etc.), and target 640 (e.g., QSPI target). As shown, BMC SoC 610 (e.g., a BMC QSPI target) includes input/output (I/O) port 645, memory 650, and host 655 (e.g., QSPI host). In some examples, SoC 605 is configured for high-performance computing environments (e.g., for data center systems, supercomputers, as a subordinate SoC, etc.).

In the illustrated example, the host 655 of the BMC attaches to target 615 of QSPI 625 via communication interface 620. In the illustrated example, the I/O port of the BMC is communicatively connected to target 640 of SoC 605 via communication interface 620 (e.g., via a QSPI bus).

As shown, memory 635, via target 640, connects to communication interface 620 as a writeable target. This enables BMC SoC 610 to write to memory 635 (e.g., to the on-chip memory of SoC 605). Thus, a trusted code image (e.g., a single central trusted code image) may be distributed by BMC SoC 610 to one or more SoCs (e.g., to multiple SoCs simultaneously or concurrently, including SoC 605) based on the one or more SoCs being configured as subordinate SoCs (e.g., as QSPI targets with on-chip memory connected to BMC SoC 610 via a QSPI bus).

In one or more examples, BMC SoC 610 is a trusted component. Because BMC SoC 610 is a trusted component, BMC SoC 610 does not run third party code. For example, BMC SoC 610 may be configured to not execute third party code, may be configured to block third party code, or may be designed to be unreachable or undetectable by third party code. BMC SoC 610 is a trusted component based on access to BMC SoC 610 being controlled and monitored. BMC SoC 610 is a trusted component based on BMC SoC 610 being configured to determine what SoC 605 is allowed to run and/or what SoC 605 is not allowed to run. Thus, BMC SoC 610 is a trusted component associated with one or more SoCs (e.g., SoC 605) that are designed for high-performance computing (e.g., an SoC with an on-chip SoC SRAM and configured as a QSPI target).

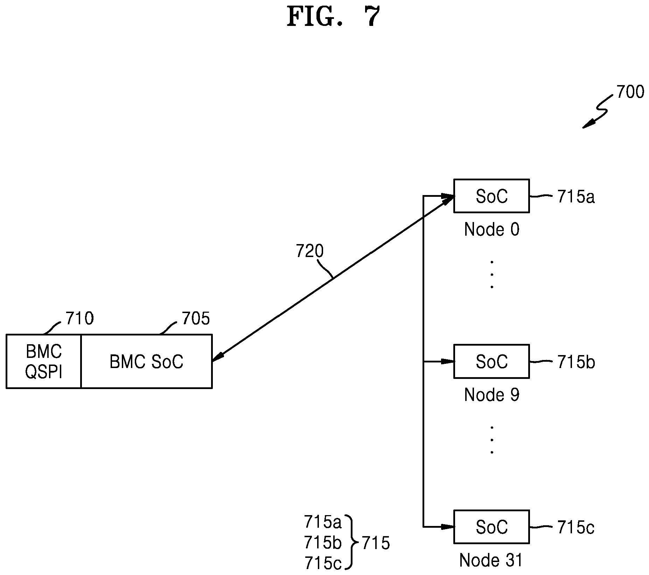

**FIG. 7** illustrates an example system 700 in accordance with one or more implementations as described herein. System 700 shows a schematic of a system on chip configuration. As shown, system 700 includes BMC SoC 705, BMC QSPI 710, SoCs 715 (e.g., SoC 715a, SoC 715b, and SoC 715c). Any SoC of the SoCs 715 may be an example of SoC 505 of FIG. 5 and/or SoC 605 of FIG. 6. BMC SoC 705 may be an example of BMC SoC 610 of FIG. 6.

The group of SoCs 715 may be configured for high-performance computing environments (e.g., supercomputer system, data center system, system of subordinate SoCs). In the illustrated example, the group of SoCs 715 may include 32 SoC nodes (e.g., of a data center system).

In the illustrated example, BMC SoC 705 may be configured as a host SoC for system 700, while the SoCs 715 (e.g., SSD nodes) may be configured as target SoCs of system 700. In some cases, at least one SoC of the SoCs 715 include a QSPI target (e.g., software, hardware, and/or firmware that responds to QSPI read and write requests from a QSPI host such as a QSPI host of BMC SoC 705). The target 640 may be an example of the QSPI target of SoC 715a and/or the QSPI target of another SoC of the SoCs 715.

In some cases, BMC QSPI 710 (e.g., BMC QSPI bus interface, BMC QSPI controller) allows multiple targets (e.g., up to 64 SoC targets) to be daisy chained (e.g., based on a broadcast mode of the QSPI communication protocol). BMC QSPI 710 may be an example of QSPI 625 of FIG. 6, BMC QSPI 710 may include a microcontroller to control communications (e.g., QSPI communications) between BMC SoC 705 and the SoCs 715.

As shown, SoC 715a is connected to SoC 715b via communication interface 725 (e.g., SPI communication interface, QSPI communication interface). In some cases, communication interface 720 and communication interface 725 are part of the same bus interface (e.g., same QSPI bus or connected QSPI busses). In some cases, communication interface 720 and communication interface 725 are different communication interfaces (e.g., based on different protocols).

In the illustrated example, based on the SoCs 715 being designed for high-performance computing (e.g., each SoC being configured with an in-chip SoC SRAM, communicatively connected to the BMC QSPI 710 via QSPI bus interface, and each of SoCs 715 being daisy chained), the BMC SoC 705 is enabled to distribute a trusted code image to one or more SoCs of the SoCs 715 (e.g., distribute a trusted code image to each of SoCs 715 concurrently, simultaneously, or in any configured order or sequence). In some cases, BMC QSPI 710 includes a QSPI target. Additionally, or alternatively, BMC SoC 705 includes a QSPI host (e.g., software, hardware, and/or firmware that issues QSPI read and write requests to a QSPI target such as target 640, a QSPI target of SoC 715a, etc.).

In one or more examples, BMC SoC 705 may send, via communication interface 720 (e.g., via a serial interface), a hold command to hold SoC 715a in a reset mode, where SoC 715a is connected to the BMC SoC 705 via communication interface 720. BMC SoC 705 may write, via communication interface 720, a code image to a memory of SoC 715a, the memory being connected to communication interface 720. In some cases, BMC SoC 705 may reboot a device (e.g., reset SoC 715a) and provide a critical firmware update without a delay. Additionally, or alternatively, BMC SoC 705 may delay rebooting the device when the firmware update is non-critical. For example, BMC SoC 705 may wait until it detects a device is rebooting and provide the non-critical firmware update based on a determination that the device is rebooting.

Upon determining the code image is written to the memory of SoC 715a, BMC SoC 705 may send, via communication interface 720, a release command to SoC 715a to release SoC 715a from the reset mode. In some cases, BMC SoC 705 may remove, via communication interface 720, the code image from the memory of SoC 715a upon detecting SoC 715a is rebooted.

In one or more examples, the BMC SoC 705 writing the code image to the memory of SoC 715a is based on a serial interface host of the BMC SoC 705 issuing, via communication interface 720, a write request to a serial interface target of SoC 715a. In some cases, the BMC SoC 705 sending the hold command is based on the BMC SoC 705 sending a reboot command to SoC 715a. In some examples, sending the reboot command includes sending the reboot command to a group of nodes that include SoC 715a.

In one or more examples, BMC SoC 705 may select the group of nodes via a select line (e.g., chip-select line) of communication interface 720. BMC SoC 705 may write the code image to the group of nodes concurrently (e.g., simultaneously) via a broadcast mode of communication interface 720. In some cases, the BMC SoC 705 sending the hold command is based on the BMC SoC 705 detecting that SoC 715a is rebooting. In some examples, communication interface 720 is a SPI or a QSPI.

In one or more examples, SoC 715a may receive, via a serial interface, a hold command to hold SoC 715a in a reset mode, SoC 715a being connected to the BMC SoC 705 via communication interface 720. SoC 715a may receive, via communication interface 720, a code image at a memory of SoC 715a (e.g., memory 635), the memory being connected to communication interface 720. SoC 715a may receive, via communication interface 720, a release command from the BMC SoC 705 to release SoC 715a from the reset mode. Based on the release command, SoC 715a may reboot and execute the code image.

In one or more examples, SoC 715a receiving the code image at the memory of SoC 715a is based on a serial interface target of SoC 715a receiving a write request from a serial interface host of the BMC SoC 705. In some cases, SoC 715a executing the code image is based on a mask read-only memory of SoC 715a (e.g., mask ROM 630) initiating execution of an executable included in the code image that is stored in the memory. SoC 715a may determine, after rebooting, that a status of the memory indicates the code image is removed from the memory.

In one or more examples, SoC 715a receiving the hold command is based on SoC 715a receiving a reboot command from the BMC SoC 705. In some cases, SoC 715a receiving the reboot command is based on the reboot command being received by a group of nodes (e.g., group of SoCs 715) that include SoC 715a. In some cases, the group of nodes, including SoC 715a, are selected to receive the code image via a select line of communication interface 720. In some cases, the code image is received by SoC 715a concurrently (e.g., simultaneously) with the group of nodes based on a broadcast mode of communication interface 720.

In one or more examples, communication interface 720 may be a SPI or a QSPI. In some cases, the memory of SoC 715a may be an on-chip volatile memory communicatively connected to communication interface 720 as a writeable target. In some cases, SoC 715a may be a system on chip of a solid-state drive.

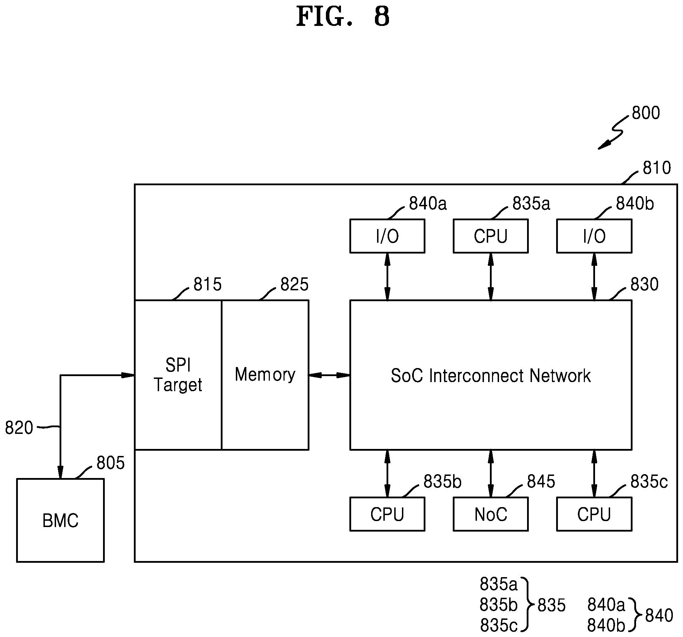

**FIG. 8** illustrates an example system 800 in accordance with one or more implementations as described herein. System 800 depicts example components for high-performance computing (e.g., storage such as SSDs, networking, processing units, parallel processing units, etc.). As shown, system 800 includes BMC 805, SoC 810 (e.g., SoC node), a serial peripheral interface (SPI) target 815 of SoC 810, and a SPI bus 820 (e.g., QSPI bus). SoC 810 may be an example of SoC 505 of FIG. 5, SoC 605 of FIG. 6, and/or an SoC of the SoCs 715 of FIG. 7. BMC 805 may be an example of BMC SoC 610 of FIG. 6 and/or BMC SoC 705 of FIG. 7. As depicted, SoC 810 includes SPI target 815, memory 825 (e.g., a volatile memory, a dual port SRAM), SoC interconnect network 830, processors 835 (e.g., parallel processors such as CPU 835a, CPU 835b, CPU 835c, etc.), input output (I/O) peripherals 840 (e.g., I/O peripheral 840a, I/O peripheral 840b etc.), and network on chip (NoC) 845. In some cases, the I/O peripherals 840 include or depict at least one I/O port. As shown, the SoC interconnect network 830 links the memory 825 to the processors 835, the I/O peripherals 840, and NoC 845 via high bandwidth interconnects (e.g., 10 Gigabit Ethernet, InfiniBand, etc.). While FIG. 8 shows three processors, two I/O peripherals, and one NoC, SoC 810 may include any number of processors, I/O peripherals, and/or NoCs.

In the illustrated example, the SPI bus 820 runs between BMC 805 and SoC 810. As shown, SPI target 815 is connected to memory 825 and memory 825 is positioned between SPI target 815 and SoC interconnect network 830. In the illustrated example, BMC 805 writes code (e.g., firmware, firmware update, trusted code image, etc.) directly to memory 825 via SPI bus 820 and SPI target 815. In some cases, BMC 805 includes a SPI host (e.g., QSPI host). In one or more examples, a given processor (e.g., CPU 835a) reads memory 825. For example, CPU 835a may read contents (e.g., firmware update or trusted code image) of memory 825 via SoC interconnect network 830. In some cases, CPU 835a may read a status of the firmware update or trusted code image loaded on memory 825 by BMC 805. Additionally, or alternatively, CPU 835a may write a status to memory 825 (e.g., firmware is updated on memory 825, firmware on memory 825 is initiated, firmware on memory 825 is executing, results of comparing data to a computed hash, setting a block of information, etc.).

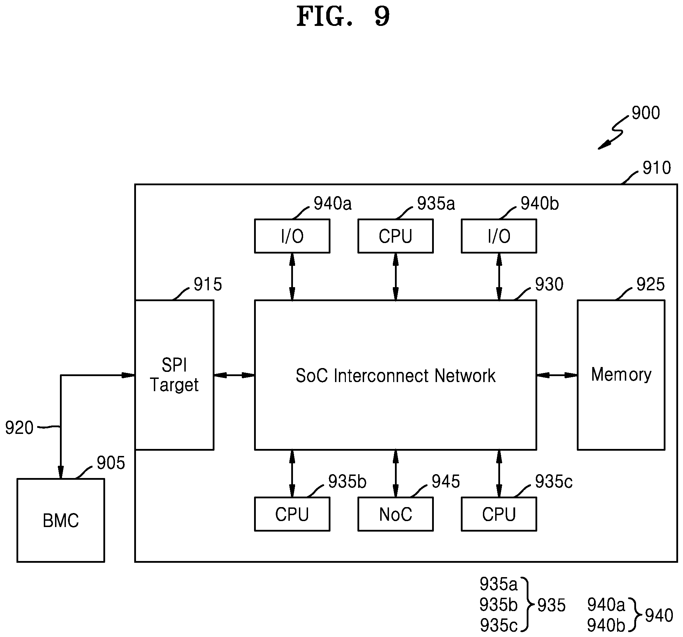

**FIG. 9** illustrates example system 900 in accordance with one or more implementations as described herein. System 900 depicts example components for high-performance computing (e.g., storage such as SSDs, networking, processing units, parallel processing units, etc.). As shown, system 900 includes BMC 905, SoC 910 (e.g., SoC node), a serial peripheral interface (SPI) target 915 of SoC 910, and a SPI bus 920 (e.g., QSPI bus). SoC 910 may be an example of SoC 505 of FIG. 5, SoC 605 of FIG. 6, an SoC of the SoCs 715 of FIG. 7, and/or SoC 810 of FIG. 8. BMC 905 may be an example of BMC SoC 610 of FIG. 6, BMC SoC 705 of FIG. 7, and/or BMC 805 of FIG. 8. As depicted, SoC 910 includes SPI target 915, memory 925 (e.g., a volatile memory, an SRAM), SoC interconnect network 930, processors 935 (e.g., parallel processors such as CPU 935a, CPU 935b, CPU 935c, etc.), input output (I/O) peripherals 940 (e.g., I/O peripheral 940a, I/O peripheral 940b etc.), and network on chip (NoC) 945. In some cases, the I/O peripherals 940 include or depict at least one I/O port. As shown, the SoC interconnect network 930 links the memory 925 to the group of processors 935, the I/O peripherals 940, and NoC 945 via high bandwidth interconnects (e.g., 10 Gigabit Ethernet, InfiniBand, etc.). While FIG. 9 shows three processors, two I/O peripherals, and one NoC, SoC 910 may include any number of processors, I/O peripherals, and/or NoCs.

In the illustrated example, the SPI bus 920 runs between BMC 905 and SoC 910. As shown, memory 925 connects to SoC interconnect network 930 and SPI target 915 connects to memory 925 via SoC interconnect network 930. Thus, BMC 905 accesses memory 925 via SPI target 915 and SoC interconnect network 930. For example, BMC 805 writes code (e.g., firmware, firmware update, trusted code image, etc.) to memory 925 via SoC interconnect network 930.

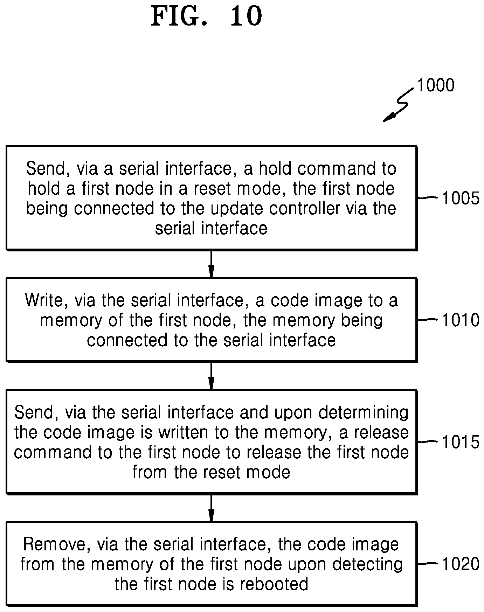

**FIG. 10** depicts a flow diagram illustrating an example method 1000 associated with the disclosed systems, in accordance with example implementations described herein. In some configurations, the method 1000 may be implemented by the update controller 140 of FIG. 1, the update controller 230 of FIG. 2, BMC SoC 610 of FIG. 6, BMC SoC 705 of FIG. 7, and/or BMC 805 of FIG. 8. In some configurations, the method 1000 may be implemented in conjunction with machine 105, components of machine 105, or any combination thereof. The method 1000 is just one implementation and one or more operations of the method 1000 may be rearranged, reordered, omitted, and/or otherwise modified such that other implementations are possible and contemplated.

At 1005, the method 1000 may include sending, via a serial interface, a hold command to hold a first node in a reset mode, the first node being connected to the update controller via the serial interface. For example, BMC SoC 705 may send, via communication interface 720, a hold command to hold SoC 715a in a reset mode, SoC 715a being connected to BMC SoC 705 via communication interface 720.

At 1010, the method 1000 may include writing, via the serial interface, a code image to a memory of the first node, the memory being connected to the serial interface. For example, BMC SoC 705 may write, via communication interface 720, a code image to a memory of the first node, the memory being connected to communication interface 720.

At 1015, the method 1000 may include sending, via the serial interface and upon determining the code image is written to the memory, a release command to the first node to release the first node from the reset mode. For example, BMC SoC 705 may send, via communication interface 720 and upon determining the code image is written to the memory, a release command to SoC 715a to release SoC 715a from the reset mode.

At 1020, the method 1000 may include removing, via the serial interface, the code image from the memory of the first node upon detecting the first node is rebooted. For example, BMC SoC 705 may remove, via communication interface 720, the code image from the memory of SoC 715a upon detecting SoC 715a is rebooted.

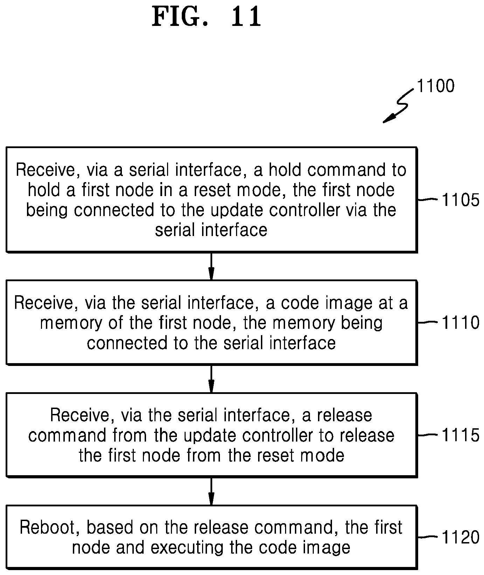

**FIG. 11** depicts a flow diagram illustrating an example method 1100 associated with the disclosed systems, in accordance with example implementations described herein. In some configurations, the method 1100 may be implemented by the update controller 140 of FIG. 1, the update controller 230 of FIG. 2, BMC SoC 610 of FIG. 6, BMC SoC 705 of FIG. 7, and/or BMC 805 of FIG. 8. In some configurations, the method 1100 may be implemented in conjunction with machine 105, components of machine 105, or any combination thereof. The method 1100 is just one implementation and one or more operations of the method 1100 may be rearranged, reordered, omitted, and/or otherwise modified such that other implementations are possible and contemplated.

At 1105, the method 1100 may include receiving, via a serial interface, a hold command to hold the first node in a reset mode, the first node being connected to the update controller via the serial interface. For example, an SoC (e.g., SoC 715a) of the SoCs 715 may receive, via communication interface 720, a hold command to hold an SoC of the SoCs 715 in a reset mode, the SoC of the SoCs 715 being connected to BMC SoC 705 via communication interface 720.

At 1110, the method 1100 may include receiving, via the serial interface, a code image at a memory of the first node, the memory being connected to the serial interface. For example, an SoC of the SoCs 715 may receive, via communication interface 720, a code image at a memory of the SoC of the SoCs 715, the memory being connected to communication interface 720.

At 1115, the method 1100 may include receiving, via the serial interface, a release command from the update controller to release the first node from the reset mode. For example, an SoC of the SoCs 715 may receive, via communication interface 720, a release command from BMC SoC 705 to release the SoC of the SoCs 715 from the reset mode.

At 1120, the method 1100 may include rebooting, based on the release command, the first node and executing the code image. For example, an SoC of the SoCs 715 may reboot, based on the release command, the SoC of the SoCs 715 and execute the code image.

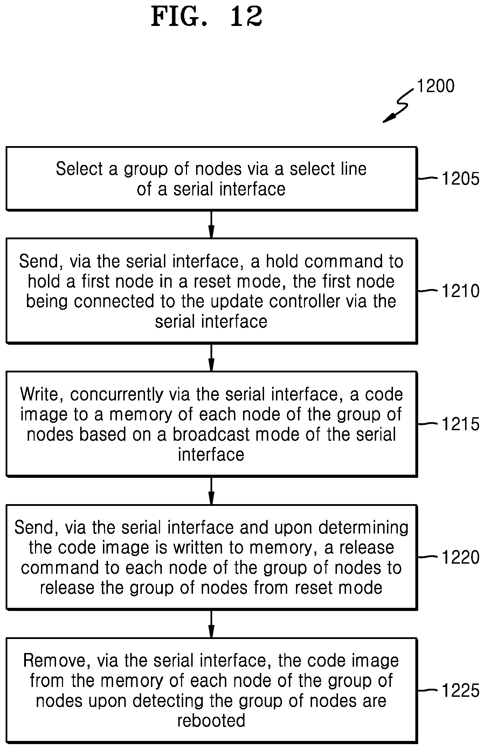

**FIG. 12** depicts a flow diagram illustrating an example method 1200 associated with the disclosed systems, in accordance with example implementations described herein. In some configurations, the method 1200 may be implemented by the update controller 140 of FIG. 1, the update controller 230 of FIG. 2, BMC SoC 610 of FIG. 6, BMC SoC 705 of FIG. 7, and/or BMC 805 of FIG. 8. In some configurations, the method 1200 may be implemented in conjunction with machine 105, components of machine 105, or any combination thereof. The method 1200 is just one implementation and one or more operations of the method 1200 may be rearranged, reordered, omitted, and/or otherwise modified such that other implementations are possible and contemplated.

At 1205, the method 1200 may include selecting a group of nodes via a select line of a serial interface (e.g., a chip-select line of SPI or QSPI). For example, BMC SoC 705 may select the SoCs 715 via a select line of a serial interface.

At 1210, the method 1200 may include sending, via a serial interface, a hold command to hold a first node in a reset mode, the first node being connected to the update controller via the serial interface. For example, BMC SoC 705 may send, via communication interface 720, a hold command to hold a first node in a reset mode, the first node being connected to the update controller via communication interface 720.

At 1215, the method 1200 may include writing, concurrently via the serial interface, a code image to a memory of each node of the group of nodes based on a broadcast mode of the serial interface. For example, BMC SoC 705 may write, concurrently via communication interface 720, a code image to a memory of each SoC of the SoCs 715 based on a broadcast mode of communication interface 720.

At 1220, the method 1200 may include sending, via the serial interface and upon determining the code image is written to each respective memory, a release command to each node of the group of nodes to release the group of nodes from reset mode. For example, BMC SoC 705 may send, via communication interface 720 and upon determining the code image is written to each respective memory, a release command to each SoC of the SoCs 715 to release the SoCs 715 from reset mode.

At 1225, the method 1200 may include removing, via the serial interface, the code image from the memory of each node of the group of nodes upon detecting the group of nodes are rebooted. For example, BMC SoC 705 may remove, via communication interface 720, the code image from the memory of each SoC of the SoCs 715 upon detecting the SoCs 715 are rebooted.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as 'communicating', when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

## Claims

1. A method (1000) of distributing code images via an update controller (610, 705, 805, 905), the method (1000) comprising:
sending (1005), via a serial interface (620, 720, 820, 920), a hold command to hold a first node (605, 715a, 810, 910) in a reset mode, the first node (605, 715a, 810, 910) being connected to the update controller (610, 705, 805, 905) via the serial interface (620, 720, 820, 920);
writing (1010), via the serial interface (620, 720, 820, 920), a code image to a memory (635, 825, 925) of the first node (605, 715a, 810, 910), the memory (635, 825, 925) being connected to the serial interface (620, 720, 820, 920);
upon determining the code image is written to the memory (635, 825, 925), sending (1015), via the serial interface (620, 720, 820, 920), a release command to the first node (605, 715a, 810, 910) to release the first node (605, 715a, 810, 910) from the reset mode; and
removing (1020), via the serial interface (620, 720, 820, 920), the code image from the memory (635, 825, 925) upon detecting the first node (605, 715a, 810, 910) is rebooted.

2. The method (1000) of claim 1, wherein writing (1010) the code image to the memory (635, 825, 925) is based on a serial interface host of the update controller (610, 705, 805, 905) issuing a write request to a serial interface target (640, 815, 915) of the first node (605, 715a, 810, 910).

3. The method (1000) of claim 1 or 2, wherein sending (1005) the hold command is based on the update controller (610, 705, 805, 905) sending a reboot command to the first node (605, 715a, 810, 910).

4. The method (1000, 1200) of claim 3, wherein sending the reboot command includes sending the reboot command to a group of nodes (715) that include the first node (605, 715a, 810, 910).

5. The method (1000, 1200) of claim 4, further comprising:
selecting (1205) the group of nodes (715) via a select line of the serial interface (620, 720, 820, 920); and
writing (1215) the code image to the group of nodes (715) concurrently via a broadcast mode of the serial interface (620, 720, 820, 920).

6. The method (1000) of any one of claims 1 to 5, wherein sending (1005) the hold command is based on the update controller (610, 705, 805, 905) detecting that the first node (605, 715a, 810, 910) is rebooting.

7. The method (1000) of any one of claims 1 to 6, wherein:
the serial interface (620, 720, 820, 920) is a serial peripheral interface or a quad serial peripheral interface; and/or
the update controller (610, 705, 805, 905) is a baseboard management controller, BMC.

8. A method (1100) of receiving, at a first node (605, 715a, 810, 910), code images from an update controller (610, 705, 805, 905), the method (1100) comprising:
receiving (1105), via a serial interface (620, 720, 820, 920), a hold command to hold the first node (605, 715a, 810, 910) in a reset mode, the first node (605, 715a, 810, 910) being connected to the update controller (610, 705, 805, 905) via the serial interface (620, 720, 820, 920);
receiving (1110), via the serial interface (620, 720, 820, 920), a code image at a memory (635, 825, 925) of the first node (605, 715a, 810, 910), the memory (635, 825, 925) being connected to the serial interface (620, 720, 820, 920);
receiving (1115), via the serial interface (620, 720, 820, 920), a release command from the update controller (610, 705, 805, 905) to release the first node (605, 715a, 810, 910) from the reset mode; and
based on the release command, rebooting the first node (605, 715a, 810, 910) and executing (1120) the code image.

9. The method (1100) of claim 8, wherein the first node (605, 715a, 810, 910) receiving (1110) the code image at the memory (635, 825, 925) is based on a serial interface target (640, 815, 915) of the first node (605, 715a, 810, 910) receiving a write request from a serial interface host of the update controller (610, 705, 805, 905).

10. The method (1100) of claim 8 or 9, wherein executing (1120) the code image is based on a mask read-only memory (635, 825, 925) of the first node (605, 715a, 810, 910) initiating execution of an executable included in the code image that is stored in the memory (635, 825, 925).

11. The method (1100) of any one of claims 8 to 10, further comprising:
determining, after rebooting, that a status of the memory (635, 825, 925) indicates the code image is removed from the memory (635, 825, 925).

12. The method (1100, 1200) of any one of claims 8 to 11, wherein:
receiving (1105) the hold command is based on the first node (605, 715a, 810, 910) receiving a reboot command from the update controller (610, 705, 805, 905), and
receiving the reboot command is based on the reboot command being received by a group of nodes (715) that include the first node (605, 715a, 810, 910).

13. The method (1100, 1200) of claim 12, wherein:
the group of nodes (715), including the first node (605, 715a, 810, 910), are selected (1205) to receive the code image via a select line of the serial interface (620, 720, 820, 920), and
the code image is received (1215) by the first node (605, 715a, 810, 910) concurrently with the group of nodes (715) based on a broadcast mode of the serial interface (620, 720, 820, 920).

14. The method (1100) of any one of claims 8 to 13, wherein:
the serial interface (620, 720, 820, 920) is a serial peripheral interface or a quad serial peripheral interface;
the memory (635, 825, 925) is an on-chip volatile memory communicatively connected to the serial interface (620, 720, 820, 920) as a writeable target; and/or
the first node (605, 715a, 810, 910) is a first system on chip of a solid-state drive.

15. A non-transitory computer-readable medium storing code, the code comprising instructions executable by a processor of an update controller (610, 705, 805, 905) to perform the method or steps thereof according to any one of claims 1 to 14.
